# EUROPÄISCHE PATENTSCHRIFT

(11) **EP 3 573 169 B1**
(45) Veröffentlichungstag und Bekanntmachung des Hinweises auf die Patenterteilung: **10.07.2024**
(21) Anmeldenummer: 19175630.3
(22) Anmeldetag: 21.05.2019
(51) Int. Cl.: H01M 10/42, H01M 10/48, H01M 10/65, B60L 50/64, H01M 50/249, A62C 3/00

(54) **BATTERIE MIT LÖSCHVORRICHTUNG UND KRAFTFAHRZEUG**
BATTERY WITH EXTINGUISHING DEVICE, AND MOTOR VEHICLE
BATTERIE POURVUE DE DISPOSITIF D'EXTINCTION ET VÉHICULE AUTOMOBILE

(30) Priorität: 23.05.2018 DE 102018112284
(43) Veröffentlichungstag der Anmeldung: 27.11.2019
(73) Patentinhaber: Volkswagen AG, 38440 Wolfsburg (DE)
(72) Erfinder: Soliman, Dr. Ahmed, 38550 Isenbüttel (DE); Schaar, Dr. Bastian, 38116 Braunschweig (DE)
(74) Vertreter: Bals & Vogel Patentanwälte PartGmbB

(56) Entgegenhaltungen:
- US-A1- 2007 164 711
- US-A1- 2011 005 781
- US-A1- 2016 243 385

## Beschreibung

Die vorliegende Erfindung betrifft eine Batterie mit einer integrierten Löschvorrichtung für ein Kraftfahrzeug, insbesondere ein Elektrofahrzeug oder Hybridfahrzeug. Ferner betrifft die Erfindung ein Kraftfahrzeug, insbesondere ein Elektrofahrzeug oder Hybridfahrzeug, mit einer gattungsgemäßen Batterie.

Als umweltfreundliche sowie energiesparende Alternative zu herkömmlichen Kraftfahrzeugen mit einem Verbrennungsmotor gewinnen insbesondere Vollhybridfahrzeuge und Elektrofahrzeuge zunehmend an Bedeutung. Vollhybridfahrzeuge und Elektrofahrzeuge weisen mindestens einen Elektromotor auf, welcher zum Antreiben des Kraftfahrzeugs ausgebildet ist, wobei Vollhybridfahrzeuge zusätzlich zum Elektromotor mindestens einen Verbrennungsmotor zum Antreiben des Kraftfahrzeugs aufweisen.

Zur Bereitstellung elektrischer Energie zum Betreiben des Elektromotors weisen Vollhybridfahrzeuge und Elektrofahrzeuge eine wiederaufladbare Batterie auf. Eine Reichweite von Vollhybridfahrzeugen ist zumindest teilweise von einer Speicherkapazität der Batterie abhängig. Die Reichweite von Elektrofahrzeugen ist proportional zur Speicherkapazität der Batterie. Da Kraftfahrzeuge nur einen begrenzten Bauraum für Batterien aufweisen, ist eine Vergrößerung der Kapazität der Batterie nur durch eine Erhöhung der Leistungsdichte beziehungsweise Energiedichte der Batterie erzielbar.

Lithium-Ionen-Batterien, welche im Folgenden als Li-lon-Batterien bezeichnet werden, weisen eine besonders hohe Leistungsdichte sowie eine relativ große Anzahl möglicher Ladezyklen beziehungsweise einen besonders geringen Kapazitätsverlust pro Ladezyklus auf. Aus diesem Grund sind Li-lonen-Batterien im Automobilbau, insbesondere bei Vollhybridfahrzeugen sowie Elektrofahrzeugen, inzwischen weit verbreitet.

Der Vorteil von Li-lon-Batterien einer hohen Energiedichte ist zugleich auch ein wesentlicher Nachteil von Li-lon-Batterien, da die hohe Energiedichte im Wesentlichen auf einer hohen Reaktionsfreudigkeit von Lithium beruht. Aufgrund der hohen Reaktionsfreudigkeit des Lithiums stellen Li-lon-Batterien, insbesondere in Unfallsituationen, ein hohes Risiko für die Umwelt dar. In Folge einer durch einen Unfall hervorgerufenen plastischen Verformung der Li-lon-Batterie kann beispielsweise Lithium aus der Li-Ion-Batterie austreten und mit der Umwelt, insbesondere mit Wasser, explosiv reagieren. Ferner kann eine derartige plastische Verformung innerhalb der Li-Ion-Batterie einen Kurzschluss bewirken, wodurch die Batterie überhitzen und schließlich brennen oder sogar explodieren kann.

Um das Risiko der Beschädigung einer Li-Ion-Batterie bei einem Kraftfahrzeug möglichst gering zu halten, werden diese Batterien durch ein Gehäuse, eine Fahrzeugstruktur des Kraftfahrzeugs sowie einen Unterfahrschutz vor äußeren mechanischen Einwirkungen geschützt. Vorzugsweise wird die Batterie an einer Stelle im Kraftfahrzeug verbaut, an welcher bei einem Crash das Beschädigungsrisiko der Batterie besonders gering ist.

Gleichwohl ist auch bei Berücksichtigung der größtmöglichen Schutzvorrichtungen ein Brand der Batterie nie hundertprozentig vermeidbar. Aus diesem Grund weisen einige Kraftfahrzeuge mit einer Li-Ion-Batterie eine Löschvorrichtung zur Brandbekämpfung an der Batterie auf. In der US 9,490,507 B2 wird ein Batterie-Management-System beschrieben, welches an eine Feuer-Lösch-Vorrichtung gekoppelt ist. Hierbei werden die einzelnen Batteriezellen der Batterie mit Sensoren überwacht. Wird eine lokale Überhitzung einer Batteriezelle detektiert, wird ein Kühlmedium durch in der Batterie integrierte Kühlkanäle zur betreffenden Batteriezelle geleitet, wodurch ein Abkühlen der Batteriezelle bewirkbar und ein thermisches Durchgehen der Batteriezelle vermeidbar oder zumindest eindämmbar ist. Die US 9,704,384 B2 betrifft ein Kältemittel führendes Kühlsystem für eine Batterie, welches mehrere Kühlplatten aufweist. Zudem weist das Kühlsystem Injektoren zum gezielten Einspritzen des Kältemittels in die Batterie im Falle einer Zellhavarie auf. Die dabei stattfindende Expansion des unter Druck stehenden Kältemittels führt zu einer lokalen Abkühlung und damit zu einem Eindämmen des thermischen Durchgehens der Batteriezellen. Die DE 10 2012 021 095 A1 offenbart eine weitere Löschvorrichtung für eine Batterie. Die Löschvorrichtung weist ein externes Reservoir zur Aufnahme des Löschmittels, eine Sensorik zum Detektieren einer Zellhavarie sowie ein Leitungssystem zum Leiten des Löschmittels in die Batterie, als Reaktion auf die Detektion einer havarierten Batteriezelle mittels der Sensorik, auf.

Die DE 10 2012 214 262 A1 beschreibt ein Löschkonzept für Hochvoltbatterien in Hybrid- und Elektrofahrzeugen. Das Löschsystem weist ein Löschmittelreservoir mit einer Sollbruchstelle auf, welches innerhalb eines Batteriegehäuses angeordnet ist. Ferner weist das Löschsystem einen Temperatursensor, eine Steuervorrichtung und einen Aktuator auf. Bei Detektieren des Überschreitens einer Grenztemperatur durch den Temperatursensor wird der Aktuator mittels der Steuervorrichtung angesteuert, um das Löschmittelreservoir an der Sollbruchstelle aufzubrechen und somit das Löschmittel freizugeben. Die DE 10 2013 216 296 A1 betrifft eine vergleichbare Batterie, wobei anstatt eines Temperatursensors ein chemischer Sensor zum Detektieren einer Beschädigung einer Batteriezelle verwendet wird. Aus den Druckschriften US 2011/0005781 A1 und US 2007/0164711 A1 sind Batterien mit unterschiedlichen Löschvorrichtungen bekannt. Dokument US 2016/0243385 A1 offenbart eine Löschvorrichtung für ein Kraftfahrzeug.

Bekannte Batterien mit Löschvorrichtungen haben den Nachteil, dass diese einen sehr komplexen Aufbau aufweisen und eine aufwendige Sensorik zum Detektieren einer Beschädigung von Batteriezellen sowie ein Aktuator zum Auslösen des Löschvorgangs erforderlich ist. Demnach sich die Herstellungskosten bekannter Batterien mit Löschvorrichtungen besonders hoch. Ferner sind insbesondere komplex aufgebaute Löschvorrichtungen sehr störanfällig, sodass ein relativ hohes Restrisiko besteht, dass die Löschvorrichtung nicht oder zumindest verspätet ausgelöst wird. Hierdurch wird die Betriebssicherheit eines Kraftfahrzeugs beeinträchtigt. Überdies haben Sollbruchstellen den Nachteil, dass diese unbeabsichtigt versagen und somit Löschmittel freigeben können, obwohl keine Zellhavarie besteht. Die Lebensdauer der Batterie kann hierdurch beeinträchtigt werden.

Es ist daher Aufgabe der vorliegenden Erfindung, die voranstehend beschriebenen Nachteile bei einer Batterie sowie bei einem Kraftfahrzeug mit einer Batterie zu beheben oder zumindest teilweise zu beheben. Insbesondere ist es Aufgabe der vorliegenden Erfindung eine Batterie und ein Kraftfahrzeug mit einer Batterie zu schaffen, die auf eine einfache und kostengünstige Art und Weise ein zuverlässiges Löschen der Batterie sicherstellen und somit das Risiko des Durchgehens von Batteriezellen vermeiden oder zumindest reduzieren.

Voranstehende Aufgabe wird durch die Patentansprüche gelöst. Demnach wird die Aufgabe durch eine Batterie für ein Kraftfahrzeug mit den Merkmalen des unabhängigen Anspruchs 1 sowie durch ein Kraftfahrzeug mit einer gattungsgemäßen Batterie mit den Merkmalen des nebengeordneten Anspruchs 9 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Batterie beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch eine Batterie für ein Kraftfahrzeug gelöst. Die Batterie weist eine einen Batterieinnenraum umgebende Batteriewandung, ein im Batterieinnenraum angeordnetes Löschmittelreservoir, in welchem ein Löschmittel aufgenommen ist, und mindestens eine im Batterieinnenraum vom Löschmittel getrennt angeordnete Batteriezelle auf. Das Löschmittelreservoir weist eine Reservoirwandung zum Zurückhalten des Löschmittels auf. Die Batterie ist derart ausgebildet, dass die Reservoirwandung bei einer normalen Betriebstemperatur der Batteriezelle eine erste Wandungstemperatur und bei einer Grenzbetriebstemperatur der Batteriezelle eine zweite Wandungstemperatur aufweist. Erfindungsgemäß ist die Reservoirwandung ausgebildet, bei der ersten Wandungstemperatur eine Dichtigkeit zum Zurückzuhalten des Löschmittels beizubehalten und bei der zweiten Wandungstemperatur durch Wärme zerstört zu werden. Die zweite Wandungstemperatur ist höher als die erste Wandungstemperatur. Mittels einer Batteriezelle der Batterie ist die Reservoirwandung auf die zweite Wandungstemperatur bringbar. Ferner weist die Reservoirwandung ein Elastomer auf, wobei die Reservoirwandung die Batteriewandung, die Batteriezellen und die Elektroden kontaktiert.

Die Batteriewandung ist ausgebildet, den Batterieinnenraum vor äußeren Einflüssen, insbesondere vor Wasser, Schmutz sowie mechanischen Belastungen oder dergleichen zu schützen. Innerhalb des Batterieinnenraums ist mindestens eine Batteriezelle, vorzugsweise sind mehrere Batteriezellen, angeordnet sowie vorzugsweise relativ zum Batteriegehäuse lagefixiert.

Die Reservoirwandung weist ein Elastomer auf. Vorzugsweise besteht die Reservoirwandung zumindest teilweise aus einem Elastomer. Die Reservoirwandung kontaktiert die Batteriewandung und die Batteriezellen sowie die Elektroden.

Das Löschmittelreservoir ist innerhalb des Batterieinnenraums angeordnet und derart abgedichtet, dass das im Löschmittelreservoir aufgenommene Löschmittel während eines Normalbetriebs der Batterie in diesem verbleibt. Auf diese Weise sind die Batteriezellen der Batterie vor dem Löschmittel geschützt. Als Löschmittel wird vorzugsweise das Löschmittel "Novec 1230 ^{®}" der Firma 3M ^{®} verwendet. Eine Seite des Löschmittelreservoirs ist mindestens einer Batteriezelle zugewandt, beispielsweise dieser, insbesondere unmittelbar, benachbart angeordnet. Eine von der Batteriezelle emittierte Wärme ist somit in die Reservoirwandung einbringbar. Zur Verbesserung des Wärmeübergangs ist die Reservoirwandung möglichst nah an der Batteriezelle angeordnet. Es kann erfindungsgemäß vorgesehen sein, dass die Reservoirwandung die Batteriezelle direkt oder über ein thermisch leitendes Zwischenmaterial berührt.

Die normale Betriebstemperatur der Batterie bezeichnet einen Temperaturbereich, welchen die Batteriezelle im Betrieb aufweisen kann, ohne dass es zu Beschädigungen der Batterie kommt. Die erste Wandungstemperatur der Reservoirwandung wird im Betrieb der Batterie der normalen Betriebstemperatur entsprechen beziehungsweise zumindest im Wesentlichen entsprechen. Die Reservoirwandung ist ausgebildet, bei der ersten Wandungstemperatur eine Struktur beizubehalten und somit ein sicheres Zurückhalten des Löschmittels zu gewährleisten.

Die Grenzbetriebstemperatur der Batteriezelle bezeichnet eine Temperatur, bei welcher eine Betriebssicherheit der Batterie nicht mehr gewährleistet ist. Ab der Grenztemperatur können beispielsweise Batteriezellen durchgehen oder explodieren. Die Reservoirwandung ist ausgebildet, bei Erreichen der zweiten Wandungstemperatur strukturell derart zu versagen, dass die Dichtigkeit nicht mehr vorhanden ist und Löschmittel durch die Reservoirwandung treten kann. Dies kann beispielsweise durch Schmelzen der Reservoirwandung bei der zweiten Wandungstemperatur erfolgen. Das strukturelle Versagen ist vorzugsweise irreversibel. Die zweite Wandungstemperatur liegt vorzugsweise unterhalb 180 °C, insbesondere zwischen 120 °C und 160 °C.

Eine erfindungsgemäße Batterie für ein Kraftfahrzeug hat gegenüber herkömmlichen Batterien den Vorteil, dass mit einfachen Mitteln sowie auf eine kostengünstige Art und Weise ein Durchgehen sowie Explodieren von Batteriezellen vermeidbar ist. Durch die Beschaffenheit der Reservoirwandung wird die Reservoirwandung automatisch zerstört, wenn eine Batteriezelle der Batterie die Grenzbetriebstemperatur erreicht, sodass die überhitzte Batteriezelle schnell gekühlt beziehungsweise gelöscht wird. Eine zusätzliche Sensorik sowie Aktorik ist nicht erforderlich. Ein Elastomer hat den Vorteil, dass das Löschmittelreservoir einem freien Raum innerhalb des Batterieinnenraums anpassbar ist. Auf diese Weise ist ein Volumen des Löschmittelreservoirs und somit eine darin aufnehmbare Menge an Löschmittel maximierbar. Ein weiterer Vorteil eines Elastomers ist, dass durch die Flexibilität der Reservoirwandung ein Wärmefluss von der Batteriezelle in die Reservoirwandung verbesserbar ist.

Es ist erfindungsgemäß bevorzugt, dass ein Teil der Reservoirwandung durch die Batteriewandung gebildet ist. Vorzugsweise weist dieser Teil der Reservoirwandung eine andere Beschaffenheit als ein den Batteriezellen zugewandter Teil der Reservoirwandung auf. Ein derart ausgebildetes Löschmittelreservoir hat den Vorteil, dass dieses besonders platzsparend ausgebildet ist und eine derartige Batterie mit einfachen Mitteln sowie kostengünstig herstellbar ist.

Weiter bevorzugt ist zwischen der Batteriezelle und dem Löschmittelreservoir eine Rückhaltevorrichtung zum Zurückhalten des Löschmittelreservoirs von der Batteriezelle angeordnet. Die Rückhaltevorrichtung weist vorzugsweise eine höhere Steifigkeit als die Reservoirwandung auf, sodass mittels der Rückhaltevorrichtung dem Löschmittelreservoir eine Bewegungsbegrenzung bereitgestellt ist. Auf diese Weise ist beispielsweise ein unbeabsichtigtes Kontaktieren der Batteriezelle durch das Löschmittelreservoir vermeidbar. Ferner ist eine unbeabsichtigte Beschädigung des Löschmittelreservoirs aufgrund äußerer Erschütterungen auf vorteilhafte Weise sowie mit einfachen Mitteln vermeidbar.

In einer besonders bevorzugten Ausgestaltung der Erfindung kann bei einer Batterie vorgesehen sein, dass die Rückhaltevorrichtung als Lochblech oder Gitter ausgebildet ist. Eine derartige Rückhaltevorrichtung hat den Vorteil, dass bei aufgrund der zweiten Wandungstemperatur beschädigter Reservoirwandung ein schnelles sowie zuverlässiges Strömen des Löschmittels zur Batteriezelle gewährleistet ist.

Vorzugsweise ist die Rückhaltevorrichtung mit der Batteriezelle, insbesondere mit einer der Rückhaltevorrichtung abgewandten Seite der Batteriezelle, thermisch leitend gekoppelt. Hierfür kontaktiert die Rückhaltevorrichtung vorzugsweise die Reservoirwandung und die Batteriezelle. Vorzugsweise ist die Rückhaltevorrichtung mit mehreren Stellen der Batteriezelle thermisch leitend gekoppelt, sodass Temperaturen unterschiedlicher Stellen der Batteriezelle abgreifbar sind. Eine thermische Kopplung hat den Vorteil, dass ein Freisetzen des Löschmittels bei Erreichen der Grenzbetriebstemperatur der Batterie verbessert ist und eine geringe Verzögerung aufweist. Zudem ist mittels einer derartigen Rückhaltevorrichtung die von der Batteriezelle erzeugte Wärme gezielt an die Reservoirwandung heranführbar, sodass ein strukturelles Versagen vorbestimmter Bereiche der Reservoirwandung bewirkbar ist. Eine thermische Anbindung an der der Rückhaltevorrichtung abgewandten Seite der Batteriezelle hat den Vorteil, dass eine Verzögerung der Freisetzung des Löschmittels weiter verbesserbar ist, insbesondere wenn die Batteriezelle zumindest temporär in verschiedenen Bereichen unterschiedliche Temperaturen aufweist.

Es ist erfindungsgemäß bevorzugt, dass die Rückhaltevorrichtung an einer Oberseite der Batteriezelle angeordnet ist. Die Oberseite der Batterie weist im eingebauten Zustand in einem Kraftfahrzeug nach oben. Dies hat den Vorteil, dass das Löschmittel mittels der Schwerkraft zur Batteriezelle leitbar ist, sodass eine verbesserte Löschung beziehungsweise Kühlung der Batteriezelle mit einfachen Mitteln sowie auf eine kostengünstige Art und Weise gewährleistet ist.

Weiter bevorzugt ist das Löschmittelreservoir als Überdruckbehälter ausgebildet. Das in das Löschmittelreservoir eingebrachte Löschmittel steht vorzugsweise unter Überdruck. Dies hat den Vorteil, dass das Löschmittel bei einer Zerstörung der Reservoirwandung besonders schnell aus dem Löschmittelreservoir austritt und die Batteriezelle somit besonders schnell und effektiv löscht beziehungsweise kühlt.

Es ist bevorzugt, dass die Batterie einen Drucksensor zur Überwachung eines Innendrucks im Löschmittelreservoir aufweist. Weiter bevorzugt ist der Innendruck im Löschmittelreservoir von der Temperatur der Löschmittelwandung abhängig, sodass von dem detektierten Druck des Löschmittels auf die Temperatur der Löschmittelwandung geschlossen werden kann. Eine bevorstehende sowie eine erfolgte Freisetzung des Löschmittels sind somit mit einfachen Mitteln aufzeigbar.

Gemäß einem zweiten Aspekt der Erfindung wird die Aufgabe durch ein Kraftfahrzeug mit einem Elektromotor und einer Batterie gelöst. Erfindungsgemäß ist die Batterie als erfindungsgemäße Batterie gemäß dem ersten Aspekt der Erfindung ausgebildet.

Bei dem beschriebenen Kraftfahrzeug ergeben sich sämtliche Vorteile, die bereits zu einer Batterie für ein Kraftfahrzeug gemäß dem ersten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise ein Durchgehen sowie Explodieren von Batteriezellen vermeidbar ist. Durch die Beschaffenheit der Reservoirwandung wird die Reservoirwandung automatisch zerstört, wenn eine Batteriezelle der Batterie die Grenzbetriebstemperatur erreicht, sodass die überhitzte Batteriezelle schnell gekühlt beziehungsweise gelöscht wird. Eine zusätzliche Sensorik sowie Aktorik ist nicht erforderlich. Insbesondere bei einer Crashsituation weist das erfindungsgemäße Kraftfahrzeug daher eine besonders große Betriebssicherheit auf.

Eine erfindungsgemäße Batterie sowie ein erfindungsgemäßes Kraftfahrzeug werden nachfolgend anhand von Zeichnungen näher erläutert. Es zeigen jeweils schematisch:
- Figur 1: in einer Schnittdarstellung eine bevorzugte erste Ausführungsform einer erfindungsgemäßen Batterie,
- Figur 2: in einer Schnittdarstellung eine bevorzugte zweite Ausführungsform einer erfindungsgemäßen Batterie, und
- Figur 3: in einer Seitenansicht ein erfindungsgemäßes Kraftfahrzeug.

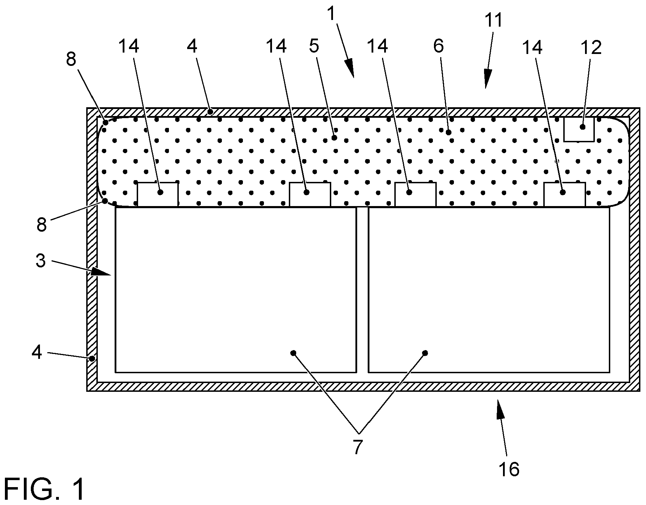

Elemente mit gleicher Funktion und Wirkungsweise sind in den Fig. 1 bis 3 jeweils mit denselben Bezugszeichen versehen.

In Fig. 1 ist eine bevorzugte erste Ausführungsform einer erfindungsgemäßen Batterie 1 schematisch in einer Schnittdarstellung abgebildet. Die Batterie 1 weist eine Batteriewandung 4 auf, welche einen Batterieinnenraum 3 umgibt und nach außen abschirmt. Im Batterieinnenraum 3 sind in diesem Beispiel zwei Batteriezellen 7, insbesondere auf Li-lon-Basis, nebeneinander angeordnet. Die Batteriezellen 7 weisen jeweils zwei Elektroden 14 auf, welche zu einer Oberseite 11 der Batterie 1 hin ausgerichtet sind. Im Bereich der Oberseite 11 der Batterie 1 ist ein Löschmittelreservoir 5 innerhalb des Batterieinnenraums 3 angeordnet. Eine Reservoirwandung 8 des Löschmittelreservoirs 5, welche insbesondere ein Elastomer aufweist, kontaktiert die Batteriewandung 4 und die Batteriezellen 7 sowie die Elektroden 14. Innerhalb des Löschmittelreservoirs 5 ist ein Löschmittel 6 angeordnet, welches vorzugsweise unter Überdruck steht. Zur Bestimmung des Drucks innerhalb des Löschmittelreservoirs 5 weist die Batterie 1 einen Drucksensor 12 auf, welcher innerhalb des Löschmittelreservoirs 5 angeordnet ist. Die Reservoirwandung 8 ist derart ausgebildet, einer normalen Betriebstemperatur der Batteriezellen 7 standzuhalten und bei Erreichen oder Überschreiten einer Grenzbetriebstemperatur mindestens einer Batteriezelle 7 nachzugeben und das Löschmittel 6 zum Löschen beziehungsweise Kühlen der Batteriezelle 7 freizugeben.

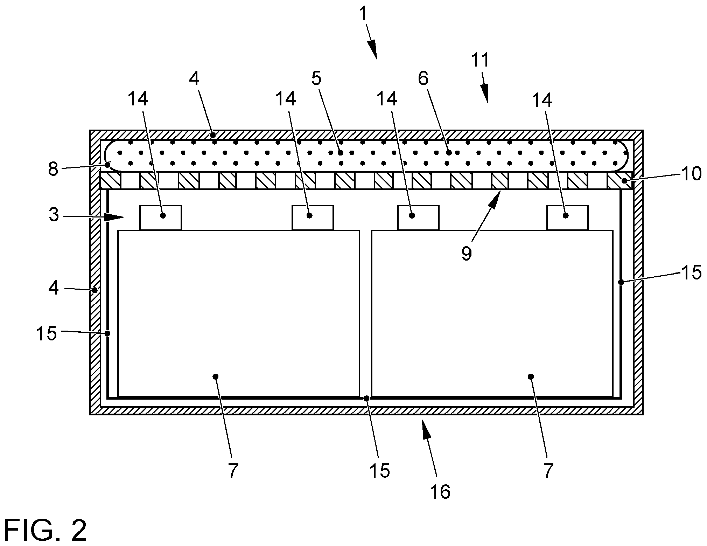

Fig. 2 zeigt eine bevorzugte zweite Ausführungsform einer erfindungsgemäßen Batterie 1 schematisch in einer Schnittdarstellung. Die Batterie 1 weist eine Batteriewandung 4 auf, welche einen Batterieinnenraum 3 umgibt und nach außen abschirmt. Im Batterieinnenraum 3 sind in diesem Beispiel zwei Batteriezellen 7, insbesondere auf Li-lon-Basis, nebeneinander angeordnet. Die Batteriezellen 7 weisen jeweils zwei Elektroden 14 auf, welche zu einer Oberseite 11 der Batterie 1 hin ausgerichtet sind. Im Bereich der Oberseite 11 der Batterie 1 ist ein Löschmittelreservoir 5 innerhalb des Batterieinnenraums 3 angeordnet. Zum Zurückhalten des Löschmittelreservoirs 5 weist die Batterie 1 eine als Lochblech 10 ausgebildete Rückhaltevorrichtung 9 auf. Die Rückhaltevorrichtung 9 weist vorzugsweise eine besonders gute thermische Leitfähigkeit, wie z. b. Kupfer, auf. Ferner ist die Rückhaltevorrichtung 9 über optionale thermische Leiter 15 mit einer Unterseite 16 der Batteriezellen 7 thermisch gekoppelt. Eine Erwärmung der Rückhaltevorrichtung 9 durch die Batteriezellen 7 kann somit über die thermischen Leiter 15 sowie direkt durch Wärmestrahlung erfolgen. Erfindungsgemäß kann auch vorgesehen sein, dass die Rückhaltevorrichtung 9 eine Oberseite 11 der Batteriezelle 7 direkt oder über einen weiteren, nicht dargestellten thermischen Leiter 15 kontaktiert. Eine Reservoirwandung 8 des Löschmittelreservoirs 5, welche insbesondere ein Elastomer aufweist, kontaktiert die Batteriewandung 4 und die Rückhaltevorrichtung 9. Innerhalb des Löschmittelreservoirs 5 ist ein Löschmittel 6 angeordnet, welches vorzugsweise unter Überdruck steht. Die Reservoirwandung 8 ist derart ausgebildet, einer normalen Betriebstemperatur der Batteriezellen 7 standzuhalten und bei Erreichen oder Überschreiten einer Grenzbetriebstemperatur mindestens einer Batteriezelle 7 nachzugeben und das Löschmittel 6 zum Löschen beziehungsweise Kühlen der Batteriezelle 7 freizugeben. Das Durchleiten des Löschmittels 6 vom Löschmittelreservoir 5 zu den Batteriezellen 7 wird durch die im Lochblech 10 ausgebildeten Löcher begünstigt.

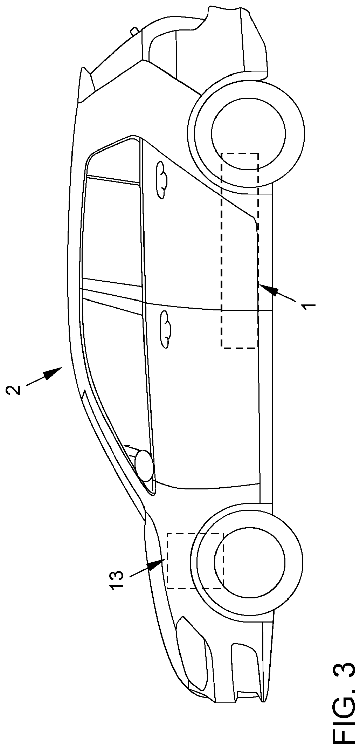

In Fig. 3 ist ein erfindungsgemäßes Kraftfahrzeug 2 schematisch in einer Seitenansicht dargestellt. Das Kraftfahrzeug 2 weist einen Elektromotor 13 sowie eine erfindungsgemäße Batterie 1 auf, welche in dieser Darstellung jeweils durch Strichlinien angedeutet sind.

### Bezugszeichenliste

- 1: Batterie
- 2: Kraftfahrzeug
- 3: Batterieinnenraum
- 4: Batteriewandung
- 5: Löschmittelreservoir
- 6: Löschmittel
- 7: Batteriezelle
- 8: Reservoirwandung
- 9: Rückhaltevorrichtung
- 10: Lochblech
- 11: Oberseite
- 12: Drucksensor
- 13: Elektromotor
- 14: Elektrode
- 15: thermischer Leiter
- 16: Unterseite

## Patentansprüche

1. Batterie (1) für ein Kraftfahrzeug (2), aufweisend eine einen Batterieinnenraum (3) umgebende Batteriewandung (4), ein im Batterieinnenraum (3) angeordnetes Löschmittelreservoir (5), in welchem ein Löschmittel (6) aufgenommen ist, und mindestens eine im Batterieinnenraum (3) vom Löschmittel (6) getrennt angeordnete Batteriezelle (7), wobei das Löschmittelreservoir (5) eine Reservoirwandung (8) zum Zurückhalten des Löschmittels (6) aufweist, und wobei die Batterie (1) derart ausgebildet ist, dass die Reservoirwandung (8) bei einer normalen Betriebstemperatur der Batteriezelle (7) eine erste Wandungstemperatur und bei einer Grenzbetriebstemperatur der Batteriezelle (7) eine zweite Wandungstemperatur aufweist,
**dadurch gekennzeichnet,**
**dass** die Reservoirwandung (8) ausgebildet ist, bei der ersten Wandungstemperatur eine Dichtigkeit zum Zurückhalten des Löschmittels (6) beizubehalten und bei der zweiten Wandungstemperatur durch die Wärme zerstört zu werden, wobei die zweite Wandungstemperatur höher als die erste Wandungstemperatur ist, und wobei die Reservoirwandung (8) mittels der Batteriezelle (7) der Batterie (1) auf die zweite Wandungstemperatur bringbar ist, wobei die Reservoirwandung (8) ein Elastomer aufweist, und wobei die Reservoirwandung (8) die Batteriewandung (4), die Batteriezellen (7) und die Elektroden (14) kontaktiert.

2. Batterie (1) nach Anspruch 1,
**dadurch gekennzeichnet,**
**dass** ein Teil der Reservoirwandung (8) durch die Batteriewandung (4) gebildet ist.

3. Batterie (1) nach Anspruch 1 oder 2,
**dadurch gekennzeichnet,**
**dass** zwischen der Batteriezelle (7) und dem Löschmittelreservoir (5) eine Rückhaltevorrichtung (9) zum Zurückhalten des Löschmittelreservoirs (5) von der Batteriezelle (7) angeordnet ist.

4. Batterie (1) nach Anspruch 3,
**dadurch gekennzeichnet,**
**dass** die Rückhaltevorrichtung (9) als Lochblech (10) oder Gitter ausgebildet ist.

5. Batterie (1) nach Anspruch 3 oder 4,
**dadurch gekennzeichnet,**
**dass** die Rückhaltevorrichtung (9) mit einer der Rückhaltevorrichtung (9) abgewandten Seite der Batteriezelle (7) thermisch leitend gekoppelt ist.

6. Batterie (1) nach einem der vorangegangenen Ansprüche,
**dadurch gekennzeichnet,**
**dass** die Rückhaltevorrichtung (9) an einer Oberseite (11) der Batteriezelle (7) angeordnet ist.

7. Batterie (1) nach einem der vorangegangenen Ansprüche,
**dadurch gekennzeichnet,**
**dass** das Löschmittelreservoir (5) als Überdruckbehälter ausgebildet ist.

8. Batterie (1) nach einem der vorangegangenen Ansprüche,
**dadurch gekennzeichnet,**
**dass** die Batterie (1) einen Drucksensor (12) zur Überwachung eines Innendrucks im Löschmittelreservoir (5) aufweist.

9. Kraftfahrzeug (2) mit einem Elektromotor (13) und einer Batterie (1),
**dadurch gekennzeichnet,**
**dass** die Batterie (1) als Batterie (1) gemäß einem der vorangegangenen Ansprüche ausgebildet ist.

## Claims

1. Battery (1) for a motor vehicle (2), comprising a battery wall (4) surrounding a battery interior (3), an extinguishing agent reservoir (5) which is arranged in the battery interior (3) and in which an extinguishing agent (6) is accommodated, and at least one battery cell (7) which is arranged separately from the extinguishing agent (6) in the battery interior (3), the extinguishing agent reservoir (5) comprising a reservoir wall (8) for retaining the extinguishing agent (6), and the battery (1) being designed such that the reservoir wall (8) has a first wall temperature at a normal operating temperature of the battery cell (7) and a second wall temperature at a limit operating temperature of the battery cell (7),
**characterized in that**
the reservoir wall (8) is designed to maintain a tightness for retaining the extinguishing agent (6) at the first wall temperature and to be destroyed by the heat at the second wall temperature, the second wall temperature being higher than the first wall temperature, and it being possible to bring the reservoir wall (8) to the second wall temperature by means of the battery cell (7) of the battery (1), the reservoir wall (8) comprising an elastomer, and the reservoir wall (8) contacting the battery wall (4), the battery cells (7) and the electrodes (14).

2. Battery (1) according to claim 1,
**characterized in that**
a part of the reservoir wall (8) is formed by the battery wall (4).

3. Battery (1) according to either claim 1 or claim 2,
**characterized in that**
a retaining device (9) for retaining the extinguishing agent reservoir (5) away from the battery cell (7) is arranged between the battery cell (7) and the extinguishing agent reservoir (5).

4. Battery (1) according to claim 3,
**characterized in that**
the retaining device (9) is designed as a perforated plate (10) or grid.

5. Battery (1) according to either claim 3 or claim 4,
**characterized in that**
the retaining device (9) is thermally conductively coupled to a side of the battery cell (7) facing away from the retaining device (9).

6. Battery (1) according to any of the preceding claims,
**characterized in that**
the retaining device (9) is arranged on an upper side (11) of the battery cell (7).

7. Battery (1) according to any of the preceding claims,
**characterized in that**
the extinguishing agent reservoir (5) is designed as a pressurized container.

8. Battery (1) according to any of the preceding claims,
**characterized in that**
the battery (1) comprises a pressure sensor (12) for monitoring an internal pressure in the extinguishing agent reservoir (5).

9. Motor vehicle (2) having an electric motor (13) and a battery (1),
**characterized in that**
the battery (1) is designed as a battery (1) according to any of the preceding claims.

## Revendications

1. Batterie (1) pour un véhicule automobile (2), présentant une paroi de batterie (4) entourant un espace intérieur de batterie (3), un réservoir d'agent d'extinction (5) disposé dans l'espace intérieur de batterie (3), dans lequel est logé un agent d'extinction (6), et au moins un élément de batterie (7) disposé dans l'espace intérieur de batterie (3) séparément de l'agent d'extinction (6), dans laquelle le réservoir d'agent d'extinction (5) présente une paroi de réservoir (8) pour la retenue de l'agent d'extinction (6), et dans laquelle la batterie (1) est conçue de telle sorte que la paroi de réservoir (8) présente une première température de paroi à une température de fonctionnement normale de l'élément de batterie (7) et une seconde température de paroi à une température de fonctionnement limite de l'élément de batterie (7),
**caractérisée en ce**
**que** la paroi de réservoir (8) est conçue pour conserver une étanchéité à la première température de paroi pour la retenue de l'agent d'extinction (6) et pour être détruite par la chaleur à la seconde température de paroi, dans laquelle la seconde température de paroi est supérieure à la première température de paroi, et dans laquelle la paroi de réservoir (8) peut être amenée à la seconde température de paroi à l'aide de l'élément de batterie (7) de la batterie (1), dans laquelle la paroi de réservoir (8) présente un élastomère, et dans laquelle la paroi de réservoir (8) est en contact avec la paroi de batterie (4), les éléments de batterie (7) et les électrodes (14).

2. Batterie (1) selon la revendication 1,
**caractérisée en ce**
**qu**'une partie de la paroi de réservoir (8) est formée par la paroi de batterie (4).

3. Batterie (1) selon la revendication 1 ou 2,
**caractérisée en ce**
**qu**'entre l'élément de batterie (7) et le réservoir d'agent d'extinction (5) est disposé un dispositif de retenue (9) pour la retenue du réservoir d'agent d'extinction (5) de l'élément de batterie (7).

4. Batterie (1) selon la revendication 3,
**caractérisée en ce**
**que** le dispositif de retenue (9) est conçu sous forme de tôle perforée (10) ou de grille.

5. Batterie (1) selon la revendication 3 ou 4,
**caractérisée en ce**
**que** le dispositif de retenue (9) est accouplé de manière thermiquement conductrice à un côté de l'élément de batterie (7) opposé au dispositif de retenue (9).

6. Batterie (1) selon l'une des revendications précédentes,
**caractérisée en ce**
**que** le dispositif de retenue (9) est disposé sur un côté supérieur (11) de l'élément de batterie (7).

7. Batterie (1) selon l'une des revendications précédentes,
**caractérisée en ce**
**que** le réservoir d'agent d'extinction (5) est conçu sous forme de réservoir à surpression.

8. Batterie (1) selon l'une des revendications précédentes,
**caractérisée en ce**
**que** la batterie (1) présente un capteur de pression (12) pour la surveillance d'une pression interne dans le réservoir d'agent d'extinction (5).

9. Véhicule automobile (2) comportant un moteur électrique (13) et une batterie (1),
**caractérisé en ce**
**que** la batterie (1) est conçue comme une batterie (1) selon l'une des revendications précédentes.
